# EUROPEAN PATENT APPLICATION

(11) **EP 3 757 771 A1**
(43) Date of publication of application: **30.12.2020**
(21) Application number: 20165083.5
(22) Date of filing: 24.03.2020
(51) Int. Cl.: G06F 9/32

(54) **METHODS, APPARATUSES, AND MEDIA FOR PROCESSING LOOP INSTRUCTION SET**

(30) Priority: 26.06.2019 CN 201910559268
(71) Applicant: BEIJING BAIDU NETCOM SCIENCE AND TECHNOLOGY CO. LTD., 100085 Beijing (CN)
(72) Inventor: An, Kang, Beijing, 100085 (CN); Du, Xueliang, Beijing, 100085 (CN); Ouyang, Jian, Beijing, 100085 (CN)
(74) Representative: Maiwald Patent- und Rechtsanwaltsgesellschaft mbH

(57) **Abstract**

The present disclosure provide a method, an apparatus, and a medium for processing a loop instruction set. The method includes: in response to obtaining a first start instruction of the loop instruction set, storing a first loop number related to the loop instruction set into a first register, and storing a value of a first program counter corresponding to a loop instruction following the first start instruction in the loop instruction set, into a second register. The method further includes: obtaining the loop instruction following the first start instruction in the loop instruction set for executing the loop instruction. The method further includes: in response to obtaining a first end instruction for indicating an end of the loop instruction set, determining a loop execution for the loop instruction set based on the first loop number and the value of the first program counter.

## Description

### FIELD

Embodiments of the present disclosure relate to a field of computers, and more particularly to a method, an apparatus, and a computer-readable storage medium for processing a loop instruction set.

### BACKGROUND

With the development of computer technologies, the amount of code in software programs increases rapidly. The number of instructions in an existing application reaches a large number. In addition, with the increasing of various applications, the applications formed by various instructions are not only widely used in a server, but also widely used in various portable electronic devices.

The program code of each application or service may be generally executed by a five-stage pipeline processing such as fetch, decode, execute, memory access, and write back. Generally, instructions may be executed correctly through the five-stage pipeline processing. However, there are still a plurality of problems to be solved during executing the instructions.

### SUMMARY

In a first aspect of the present disclosure, there is provided a method for processing a loop instruction set. The method includes: in response to obtaining a first start instruction of the loop instruction set, storing a first loop number related to the loop instruction set into a first register, and storing a value of a first program counter corresponding to a loop instruction following the first start instruction in the loop instruction set, into a second register; obtaining the loop instruction following the first start instruction in the loop instruction set for executing the loop instruction; and in response to obtaining a first end instruction for indicating an end of the loop instruction set, determining a loop execution for the loop instruction set based on the first loop number in the first register and the value of the first program counter in the second register.

In a second aspect of the present disclosure, there is provided an apparatus for processing a loop instruction set. The apparatus includes a first storage module, a loop instruction obtaining module, and a first loop determining module. The first storage module is configured to, in response to obtaining a first start instruction of the loop instruction set, store a first loop number related to the loop instruction set into a first register, and store a value of a first program counter corresponding to a loop instruction following the first start instruction in the loop instruction set, into a second register. The loop instruction obtaining module is configured to obtain the loop instruction following the first start instruction in the loop instruction set for executing the loop instruction. The first loop determining module is configured to, in response to obtaining a first end instruction for indicating an end of the loop instruction set, determine a loop execution for the loop instruction set based on the first loop number in the first register and the value of the first program counter in the second register.

In a third aspect of the present disclosure, there is a computer-readable storage medium having computer programs stored thereon. When the computer programs are executed by a processor, the method according to the first aspect of the present disclosure is implemented.

It should be understood that, descriptions in Summary of the present disclosure are not intended to limit an essential or important feature in embodiments of the present disclosure, and are also not construed to limit the scope of the present disclosure. Other features of the present disclosure will be easily understood by following descriptions.

### BRIEF DESCRIPTION OF THE DRAWINGS

The above and other features, advantages and aspects of respective embodiments of the present disclosure will become more apparent with reference to accompanying drawings and following detailed illustrations. In the accompanying drawings, the same or similar numeral references represent the same or similar elements, in which:
FIG. 1 is a block diagram illustrating an exemplary scene 100 for processing a loop instruction set according to embodiments of the present disclosure;
FIG. 2 is a flow chart illustrating a method 200 for processing a loop instruction set according to embodiments of the present disclosure;
FIG. 3 is a flow chart illustrating a method 300 for processing a loop instruction set according to embodiments of the present disclosure;
FIG. 4 is a block diagram illustrating an apparatus 400 for processing a loop instruction set according to embodiments of the present disclosure; and
FIG. 5 is a block diagram illustrating a computing device 500 capable of implementing a plurality of embodiments of the present disclosure.

### DETAILED DESCRIPTION

Description will be made in detail below to embodiments of the present disclosure with reference to accompanying drawings. Some embodiments of the present disclosure are illustrated in the accompanying drawings. It should be understood that, embodiments of the present disclosure may be implemented by various ways, but not be construed as a limitation of the embodiments herein. On the contrary, those embodiments provided are merely for a more thorough and complete understanding of the present disclosure. It should be understood that, the accompanying drawings and embodiments of the present disclosure are merely for exemplary purposes, but is not meant to limit the protection scope of the present disclosure.

In the description of embodiments of the present disclosure, the terms "includes" and its equivalents like should be understood as an open "include", that is, "include but not limited to". The terms "based on" should be understood as "based at least in part". The terms "an embodiment" or "the embodiment" should be understood as "at least one embodiment". The terms "first", "second" and the like may represent different or same objects. Other explicit and implicit definitions may also be included below.

A loop program is common in programs. Problems such as data hazards (RAW, Read after Write) and control hazards may be occurred when it is judged whether the loop program may be jumped out of at an end of the loop program. Therefore, a processor pipeline needs to pause to wait for a complement of a condition judgment, which may cause relatively-large performance loss. Since there are a large amount of matrix operations in an artificial intelligence (AI) processor, there may be a large amount of loop programs and multi-level nested loop programs. In this case, the instruction executing efficiency of the entire processor may be improved when the processing efficiency of the processor for the loop programs and the multi-level nested loop programs may be improved.

In order to solve the pipeline waiting problem brought by the data hazards and control hazards caused by the loop program judgment, conventional solutions are generally as follows. In solution 1, two instructions before or following a loop body are inserted into jump delay slots (the number of delay slots is 2) through a compiler. In solution 2, subsequent instructions are executed in advance without waiting for the complement of the condition judgment in a branch prediction way. In solution 3, by utilizing a ring buffer, it learns the jump automatically and store subsequent instructions automatically through hardware (e.g. ARM x86), in which a pre-stored instruction segment may be directly jumped to without recalculating a start address when the jump occurs again. In solution 4, in some digital signal processing (DSP) processors, the ring buffer may be combined, and the loop number and the loop start address are pre-stored by utilizing the compiler. The solution 4 writes the loop number and the loop body into the loop buffer in advance through the compiler. In solution 5, the loop number is pre-stored by utilizing the compiler in some designs, and the start and end of the loop is marked by utilizing special instructions, thus the start of the loop may be jumped directly without recalculation at the end of the loop.

However, there are following problems and disadvantages in the above conventional solutions. The solution 1 is very limited, which usually depends on whether the compiler may find appropriate instructions to fill in. Meanwhile, a special processing needs to be performed at a boundary of the loop, and the solution 1 is hard to be implemented when a pipeline depth is deep enough. The problem in the solution 2 is that the entire pipeline needs to be flushed once the branch prediction fails, which costs high, and especially a prediction failure caused by a first entry and a last exit of the loop is hard to be avoided. This design for the solution 3 is mainly to reduce the pressure and power consumption of an instruction fetching module and does not solve a waiting problem of the jump delay slot. Meanwhile, there are a plurality of limitations in the solution 3. For example, a loop nesting is not supported, a loop exceeding a depth in the loop buffer is not supported, and jump instructions in the loop are not supported. There are a plurality of limitations in the solution 4. For example, another jump or loop may not be existed in the loop body; the loop program may not be greater than the loop buffer; and the loop number needs to be a constant. The solution 5 is the further optimization on the basis of the solution 4. The solution 5 determines whether a jump state is satisfied by a general register storing the loop number and special status bits, so there is still a data hazard problem. For some processors that may not update the status bit until an execution stage, there is a problem of whether the solution 5 is realizable.

According to embodiments of the present disclosure, there is provided an improved solution for processing a loop instruction set. In the solution, two registers are disposed in an obtaining module. In response to obtaining a first start instruction of the loop instruction set, a first loop number related to the loop instruction set is stored into a first register, and a value of a first program counter corresponding to a loop instruction following the first start instruction in the loop instruction set is stored into a second register; the loop instruction is executed; and in response to obtaining a first end instruction for indicating an end of the loop instruction set, a loop execution for the loop instruction set is determined based on the first loop number in the first register and the value of the first program counter in the second register. With the solution, the pipeline waiting caused by the condition adjustment for a first entry and a last exit of the loop instruction set, or the pipeline flushing caused by the failure of the branch prediction, may be avoided, and the efficiency for executing instructions is improved. Meanwhile, a loop with any length and the multi-level nested loop are supported, and the safety of processing the loop instructions is ensured.

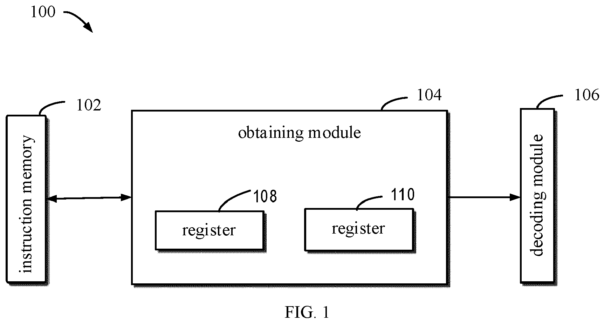

FIG. 1 is a block diagram illustrating an exemplary scene 100 for processing a loop instruction set according to embodiments of the present disclosure. As illustrated in FIG. 1, the exemplary scene 100 includes an instruction memory 102, an obtaining module 104, and a decoding module 106.

The instruction memory 102 is configured to store instructions to be executed. The instruction memory 102 includes, but is not limited to, a double data rate synchronous dynamic random-access memory (DDR), a random access memory (RAM), a read only memory (ROM), an erasable programmable read only memory (EEPROM), a flash memory or other memory technologies, or any other non-transmission medium that may be configured to store desired information and may be accessed by the obtaining module 104.

The obtaining module 104 is configured to obtain the instructions in the instruction memory 102. For example, the obtaining module 104 is an instruction fetching module for fetching the instructions. The obtaining module 104 also controls an obtaining procedure, and sends the obtained instructions to the decoding module 106 for performing decoding processing. The obtaining module 104 includes a pair of registers, which are a register 108 and a register 110. In FIG. 1, the obtaining module 104 includes the register 108 and the register 110 for an example, but not limits the present disclosure. The obtaining module 104 may include any number of registers.

In some embodiments, the obtaining module 104 controls a loop instruction set by utilizing the register 108 and the register 110. When a loop instruction subset is nested in the loop instruction set, another pair of registers may be set to implement an execution for the loop instruction subset.

When the loop instruction set is obtained, the obtaining module 104 may store a loop number of the loop instruction set to be executed into the register 108, and store a value of a program counter of a first instruction following a start instruction in the loop instruction set into the register 110, in which the first instruction is an instruction needing to be looped actually. Then, the execution for loop instruction in the loop instruction set starts. When an end of the loop instruction is executed, for example, when an end instruction for indicating the end of the loop instruction set is obtained, the obtaining module determines whether the loop number stored in the register 108 is a predetermined value. In an example, the predetermined value is 0. The above example is only for describing the present disclosure, but not a detailed limitation for the present disclosure. The skilled in the art may set the predetermined value based on needs.

When it is detected that the value in the register 108 is the predetermined value, it indicates that the exaction for the loop instruction set is completed. Therefore, the loop instruction set is exited, and the obtaining module obtains instructions following the loop instruction set.

In some embodiments, some functions in the register 108, the register 110 and the obtaining module 104 may constitute a loop state machine. The loop state machine is configured to execute the loop instruction set. The loop number is stored into the register 108 when the start instruction in the loop instruction set is obtained, and the value of the program counter of the instruction following the start instruction is stored into the register 110, and then the obtaining module 104 enters the loop state machine. The loop state machine is exited when the end instruction of the loop instruction set is detected and the loop number in the register 108 becomes 0, otherwise the loop instruction is executed in the loop state machine.

When it is detected that the value in the register 108 is not the predetermined value, it indicates that the execution for the loop instruction set also needs to be looped. Therefore, the obtaining module 104 reads a start position of the loop instruction to be executed which locates in the loop instruction set from the register 110, and then the loop instruction in the loop instruction set may be re-executed.

The decoding module 106 is configured to decode the instructions (such as, the loop instruction) obtained in the obtaining module 104 for executing the decoded instructions.

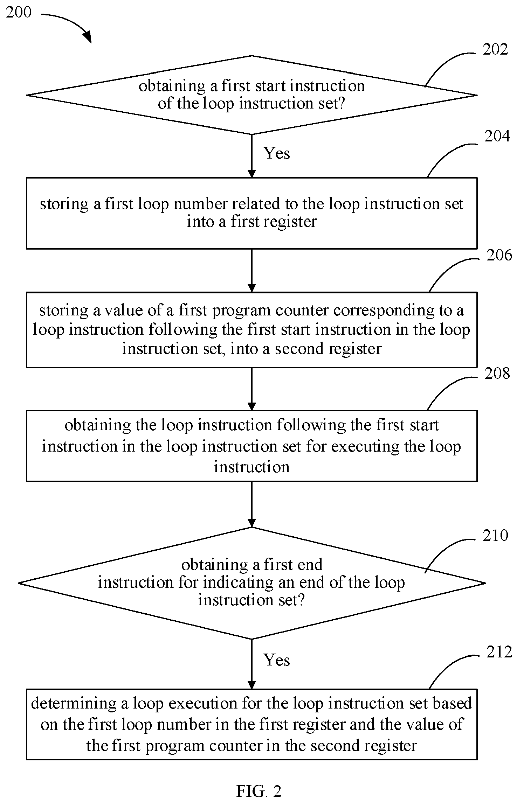

FIG. 1 describes the block diagram of the exemplary scene 100 for processing the loop instruction set according to embodiments of the present disclosure above. A flow chart of a method 200 for processing a loop instruction set according to embodiments of the present disclosure will be described below with reference to FIG. 2.

As illustrated in FIG. 2, at block 202, the obtaining module determines whether a start instruction of the loop instruction set is obtained. For convenience of description, the start instruction will also be referred as a first start instruction below. For example, the obtaining module 104 in FIG. 1 is configured to obtain instructions stored in the instruction memory 102. The obtaining module 104 determines whether the first start instruction of the loop instruction set is obtained.

When the first start instruction of the loop instruction set is obtained, at block 204, the obtaining module stores a loop number related to the loop instruction set into a first register. For convenience of description, the loop number will also be referred as a first loop number below. For example, the obtaining module 104 stores the first loop number in the loop instruction set into the register 108 when obtaining the first start instruction in the loop instruction set. The first loop number in the register 108 is configured to control the number of loop executions for the loop instruction set, and a value of the first loop number is decreased by one after the loop execution for the loop instruction set is completed for one time.

At block 206, the obtaining module stores a value of a first program counter corresponding to a loop instruction following the first start instruction in the loop instruction set, into a second register. For example, the obtaining module 104 stores the value of the program counter into the register 110 when obtaining the start instruction of the loop instruction set and storing the loop number, in which, the value of the program counter corresponds to a loop instruction following the start instruction in the loop instruction set. With the value of the program counter stored in the register 110, a loop instruction at a position corresponding to the value of the program counter is executed when the loop instruction set is executed each time

At block 208, the obtaining module obtains the loop instruction following the first start instruction in the loop instruction set for executing the loop instruction. For example, the obtaining module 104 starts to perform loop execution at the loop instruction following the start instruction in the loop instruction set.

At block 210, the obtaining module determines whether a first end instruction for indicating an end of the loop instruction set is obtained. For example, in FIG. 1, the obtaining module 104 determines whether an instruction obtained from the instruction memory 102 indicates the end of the loop instruction set.

When the first end instruction for indicating the end of the loop instruction set is not obtained, the execution of the loop instruction set is not complete, and the loop instruction set is executed continuously.

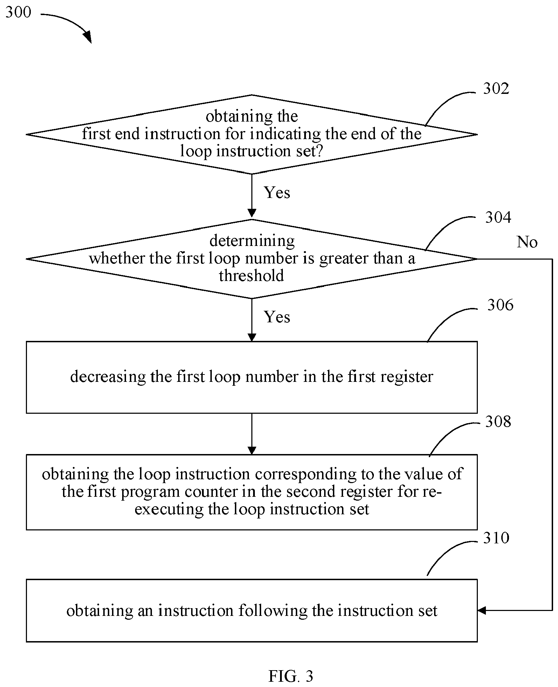

When the first end instruction for indicating the end of the loop instruction set is obtained, at block 212, the obtaining module determines the loop execution for the loop instruction set based on the first loop number in the first register and the value of the program counter in the second register. For example, the obtaining module 104 in FIG. 1 determines whether the loop execution for the loop instruction set is performed based on the loop number in the register 108 and the value of the program counter in the register 110 when determining that the end instruction for indicating the end of the loop instruction set is obtained. A procedure for determining the loop execution for the loop instruction set will be described in detail below with reference to FIG. 3.

The two registers are disposed in the obtaining module to control the execution for the loop instruction set, thereby eliminating the pipeline waiting caused by the condition adjustment for a first entry and a last exit of the loop body, or the pipeline flushing caused by the failure of the branch prediction, controlling data hazards, and improving the efficiency for executing the instructions.

The flow chart of the method 200 for processing the loop instruction set according to embodiments of the present disclosure is described above with reference to FIG. 2. The procedure for determining the loop execution for the loop instruction set at block 212 in the method 200 of FIG. 2 will be described in detail below with reference to FIG. 3. FIG. 3 is a flow chart illustrating a method 300 for processing a loop instruction set according to embodiments of the present disclosure.

As illustrated in FIG. 3, at block 302, the obtaining module determines whether the end instruction for indicating the end of the loop instruction set is obtained. For convenience of description, the end instruction is referred as a first end instruction. For example, in FIG. 1, the obtaining module 104 determines whether the end instruction in the loop instruction set is obtained when obtaining the loop instruction in the instruction memory 102.

In response to obtaining the end instruction for indicating the end of the loop instruction set, the obtaining module determines whether the loop number is greater than a threshold at block 304. For example, in FIG. 1, the obtaining module 104 may determine the loop number of the loop instruction set, stored in the register 108, is greater than the threshold (such as, 0) when obtaining the end instruction of the loop instruction set from the instruction memory 102. The above example is used for describing the present disclosure, but not limit the present disclosure.

When the loop number is greater than the threshold, the obtaining module decreases the loop number in the first register at block 306. After it is determined that the loop number is greater than the threshold, the loop number needs to be readjusted. For example, the loop number is decreased by one. Then the loop number in the first register is updated by utilizing the decreased loop number. For example, in FIG. 1, the obtaining module 104 decreases the loop number in the register 108 by one when determining that the loop number is greater than the threshold.

At block 308, the obtaining module obtains the loop instruction corresponding to the value of the program counter in the second register for re-executing the loop instruction set. When it is determined that the loop number is greater than the threshold, the loop instruction needs to be re-executed. Meanwhile, a start position of the loop instruction needing to be re-executed may be determined through the value of the program counter stored in the second register. For example, in FIG. 1, the obtaining module 104 is configured to read the value of the program counter from the register 110 to obtain the loop instruction following the start instruction in the loop instruction set.

When the loop number is smaller than or equal to the threshold, actions at block 310 are executed. At block 310, the obtaining module obtains an instruction following the loop instruction set. When the loop number is equal to the threshold, such as 0, the loop execution for the loop instruction set is completed, and the obtaining module 104 obtains the instruction following the loop instruction set.

The loop number in the first register is determined, and an instruction for restarting the loop execution may be obtained via the second register when the loop number is not the predetermined value, thereby implementing the loop execution through the registers, but not performing adjustment at the first entry and the last exit of the loop body. Meanwhile, the pipeline waiting or the pipeline flushing is reduced, the safety of instructions is ensured, and the efficiency for executing instructions is improved.

In some embodiments, when the loop instruction set includes a loop instruction subset, in response to obtaining the loop instruction subset, a procedure for obtaining the current loop instruction set is suspended, and a procedure for obtaining the loop instruction subset is entered. The procedure for executing the loop instruction subset through the obtaining module is the same as that for executing the loop instruction set. Meanwhile, another pair of registers needs to be disposed at the obtaining module. For convenience of description, another pair of registers may be referred as a third register and a fourth register.

During executing the loop instruction subset, in response to obtaining a second start instruction in the loop instruction subset, the obtaining module stores a second loop number related to the loop instruction subset into the third register and stores a value of a second program counter corresponding to a sub-loop instruction following the second start instruction in the loop instruction subset, into the fourth register. For example, when obtaining the second start instruction in the loop instruction subset, the obtaining module 104 in FIG. 1 stores the second loop number corresponding to the loop instruction subset into the third register and stores the value of the second program counter corresponding to the sub-loop instruction following the second start instruction in the loop instruction subset, into the fourth register.

Then, the obtaining module obtains the sub-loop instruction following the second start instruction in the loop instruction subset for executing the sub-loop instruction. In response to obtaining a second end instruction for indicating an end of the loop instruction subset, the obtaining module determines a loop execution for the loop instruction subset based on the second loop number in the third register and the value of the second program counter in the fourth register.

The above example is only for describing the present disclosure, but not limit the present disclosure. When there is a multi-level nested loop, a plurality of pairs of registers may be set to implement the multi-level nested loop.

The plurality of pairs of registers are disposed to support the loop with any length and the multi-level nested loop, such that when multi-level loop nested processing is performed, a plurality of loops may be executed quickly, the pipeline waiting caused by a plurality of conditional judgments for entering and exiting the loop instruction set or the failure of the branch prediction may be reduced, and the efficiency of processing a multi-level loop instruction set is improved.

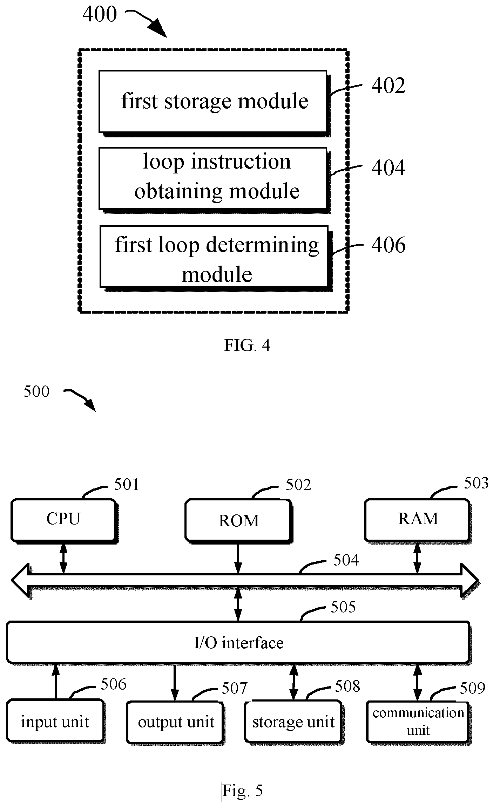

FIG. 4 is a block diagram illustrating an apparatus 400 for processing a loop instruction set according to embodiments of the present disclosure. The apparatus 400 may be included or implemented as the obtaining module 104 illustrated in FIG. 1. As illustrated in FIG. 4, the apparatus 400 may include a first storage module 402, configured to, in response to obtaining a first start instruction of the loop instruction set, store a first loop number related to the loop instruction set into a first register, and store a value of a first program counter corresponding to a loop instruction following the first start instruction in the loop instruction set, into a second register. The apparatus 400 may further include a loop instruction obtaining module 404, configured to obtain the loop instruction following the first start instruction in the loop instruction set for executing the loop instruction. The apparatus 400 may further include a first loop determining module 406, configured to, in response to obtaining a first end instruction for indicating an end of the loop instruction set, determine a loop execution for the loop instruction set based on the first loop number in the first register and the value of the first program counter in the second register.

In some embodiments, the first loop determining module 406 includes: a loop number comparing module, and a number decreasing and obtaining module. The loop number comparing module is configured to, in response to obtaining the first end instruction for indicating the end of the loop instruction set, determine whether the first loop number is greater than a threshold. The number decreasing and obtaining module is configured to, in response to that the first loop number is greater than the threshold, decrease the first loop number in the first register, and obtain the loop instruction corresponding to the value of the first program counter in the second register for re-executing the loop instruction set.

In some embodiments, the first loop determining module 406 further includes an instruction obtaining module, configured to obtain an instruction following the loop instruction set in response to that the first loop number is not greater than the threshold.

In some embodiments, the loop instruction obtaining module 404 further includes a sub-loop instruction set executing module, configured to, in response to obtaining a loop instruction subset, execute the loop instruction subset.

In some embodiments, the sub-loop instruction set executing module includes: a second storage module, a sub-loop instruction obtaining module, and a second loop determining module. The second storage module is configured to, in response to obtaining a second start instruction in the loop instruction subset, store a second loop number related to the loop instruction subset into a third register, and store a value of a second program counter corresponding to a sub-loop instruction following the second start instruction in the loop instruction subset, into a fourth register. The sub-loop instruction obtaining module is configured to obtain the sub-loop instruction following the second start instruction in the loop instruction subset for executing the sub-loop instruction. The second loop determining module is configured to, in response to obtaining a second end instruction for indicating an end of the loop instruction subset, determine a loop execution for the loop instruction subset based on the second loop number in the third register and the value of the second program counter in the fourth register.

FIG. 5 is a block diagram illustrating an electronic device 500 capable of implementing embodiments of the present disclosure. The device 500 may be configured to implement an obtaining module 104 illustrated in FIG. 1. As illustrated in FIG. 5, the device 500 includes a computing unit 501. The computing unit 501 may execute various appropriate actions and processes according to computer program instructions stored in a read only memory (ROM) 502 or computer program instructions loaded to a random access memory (RAM) 503 from a storage unit 508. The RAM 503 may also store various programs and date required. The CPU 501, the ROM 502, and the RAM 503 may be connected to each other via a bus 504. An input/output (I/O) interface 505 is also connected to the bus 504.

A plurality of components in the device 500 are connected to the I/O interface 505, including: an input unit 506 such as a keyboard, a mouse; an output unit 507 such as various types of displays, loudspeakers; a storage unit 508 such as a magnetic disk, an optical disk; and a communication unit 509, such as a network card, a modem, a wireless communication transceiver. The communication unit 509 allows the device 500 to exchange information/data with other devices over a computer network such as the Internet and/or various telecommunication networks.

The computing unit 501 may be various general-purpose and/or special-purpose processing components having processing and computing capabilities. Some examples of the computing unit 501 include, but are not limited to, a central processing unit (CPU), a graphics processing unit (GPU), various dedicated artificial intelligence (AI) computing chips, various computing units running machine learning model algorithms, a digital signal processor (DSP), and any suitable processor, controller, microcontroller, etc. The computing unit 501 executes the above-mentioned methods and processes, such as the method 200 and method 300. For example, in some implementations, the method 200 and method 300 may be implemented as computer software programs. The computer software programs are tangibly contained a machine readable medium, such as the storage unit 508. In some embodiments, a part or all of the computer programs may be loaded and/or installed on the device 500 through the ROM 502 and/or the communication unit 509. When the computer programs are loaded to the RAM 503 and are executed by the computing unit 501, one or more blocks of the method 200 and method 300 described above may be executed. Alternatively, in other embodiments, the computing unit 501 may be configured to execute the method 200 and method 300 in other appropriate ways (such as, by means of hardware).

The functions described herein may be executed at least partially by one or more hardware logic components. For example, without not limitation, exemplary types of hardware logic components that may be used include: a field programmable gate array (FPGA), an application specific integrated circuit (ASIC), an application specific standard product (ASSP), a system on chip (SOC), a complex programmable logic device (CPLD) and the like.

Program codes for implementing the method of the present disclosure may be written in any combination of one or more programming languages. These program codes may be provided to a processor or a controller of a general purpose computer, a special purpose computer or other programmable data processing device, such that the functions/operations specified in the flowcharts and/or the block diagrams are implemented when these program codes are executed by the processor or the controller. These program codes may execute entirely on a machine, partly on a machine, partially on the machine as a stand-alone software package and partially on a remote machine, or entirely on a remote machine or entirely on a server.

In the context of the present disclosure, the machine-readable medium may be a tangible medium that may contain or store a program to be used by or in connection with an instruction execution system, apparatus, or device. The machine-readable medium may be a machine-readable signal medium or a machine-readable storage medium. The machine-readable medium may include, but not limit to, an electronic, magnetic, optical, electromagnetic, infrared, or semiconductor system, apparatus, or device, or any suitable combination of the foregoing. More specific examples of the machine-readable storage medium may include electrical connections based on one or more wires, a portable computer disk, a hard disk, a RAM, a ROM, an erasable programmable read-only memory (EPROM or flash memory), an optical fiber, a portable compact disk read-only memory (CD-ROM), an optical storage, a magnetic storage device, or any suitable combination of the foregoing.

In addition, although the operations are depicted in a particular order, it should be understood to require that such operations are executed in the particular order illustrated in the accompanying drawings or in a sequential order, or that all illustrated operations should be executed to achieve the desired result. Multitasking and parallel processing may be advantageous in certain circumstances. Likewise, although several specific implementation details are included in the above discussion, these should not be construed as limitation of the scope of the present disclosure. Certain features described in the context of separate embodiments may also be implemented in combination in a single implementation. On the contrary, various features described in the context of the single implementation may also be implemented in a plurality of implementations, either individually or in any suitable sub-combination.

Although the subject matter has been described in language specific to structural features and/or methodological acts, it should be understood that the subject matter defined in the appended claims is not limited to the specific features or acts described above. Instead, the specific features and acts described above are merely exemplary forms of implementing the claims.

## Claims

1. A method (200) for processing a loop instruction set, comprising:
in response to obtaining (202) a first start instruction of the loop instruction set,
storing (204) a first loop number related to the loop instruction set into a first register, and
storing (206) a value of a first program counter corresponding to a loop instruction following the first start instruction in the loop instruction set, into a second register;
obtaining (208) the loop instruction following the first start instruction in the loop instruction set for executing the loop instruction; and
in response to obtaining (210) a first end instruction for indicating an end of the loop instruction set, determining (212) a loop execution for the loop instruction set based on the first loop number in the first register and the value of the first program counter in the second register.

2. The method (300) of claim 1, wherein determining (212) the loop execution for the loop instruction set comprises:
in response to obtaining (302) the first end instruction for indicating the end of the loop instruction set, determining (304) whether the first loop number is greater than a threshold; and
in response to that the first loop number is greater than the threshold,
decreasing (306) the first loop number in the first register, and
obtaining (308) the loop instruction corresponding to the value of the first program counter in the second register for re-executing the loop instruction set.

3. The method (300) of claim 2, wherein determining (212) the loop execution for the loop instruction set further comprises:
in response to that the first loop number is not greater than the threshold, obtaining (310) an instruction following the loop instruction set.

4. The method (200; 300) of any one of claims 1 to 3, wherein obtaining (310) the loop instruction following the first start instruction in the loop instruction set comprises:
in response to obtaining a loop instruction subset, executing the loop instruction subset.

5. The method (200; 300) of claim 4, wherein executing the loop instruction subset comprises:
in response to obtaining a second start instruction in the loop instruction subset,
storing a second loop number related to the loop instruction subset into a third register, and
storing a value of a second program counter corresponding to a sub-loop instruction following the second start instruction in the loop instruction subset, into a fourth register;
obtaining the sub-loop instruction following the second start instruction in the loop instruction subset for executing the sub-loop instruction; and
in response to obtaining a second end instruction for indicating an end of the loop instruction subset, determining a loop execution for the loop instruction subset based on the second loop number in the third register and the value of the second program counter in the fourth register.

6. An apparatus (400) for processing a loop instruction set, comprising:
a first storage module (402), configured to, in response to obtaining a first start instruction of the loop instruction set, store a first loop number related to the loop instruction set into a first register, and store a value of a first program counter corresponding to a loop instruction following the first start instruction in the loop instruction set, into a second register;
a loop instruction obtaining module (404), configured to obtain the loop instruction following the first start instruction in the loop instruction set for executing the loop instruction; and
a first loop determining module (406), configured to, in response to obtaining a first end instruction for indicating an end of the loop instruction set, determine a loop execution for the loop instruction set based on the first loop number in the first register and the value of the first program counter in the second register.

7. The apparatus (400) of claim 6, wherein the first loop determining module (406) comprises:
a loop number comparing module, configured to, in response to obtaining the first end instruction for indicating the end of the loop instruction set, determine whether the first loop number is greater than a threshold; and
a number decreasing and obtaining module, configured to, in response to that the first loop number is greater than the threshold, decrease the first loop number in the first register, and obtain the loop instruction corresponding to the value of the first program counter in the second register for re-executing the loop instruction set.

8. The apparatus (400) of claim 7, wherein the first loop determining module (406) further comprises:
an instruction obtaining module, configured to obtain an instruction following the loop instruction set in response to that the first loop number is not greater than the threshold.

9. The apparatus (400) of any one of claims 6 to 8, wherein the loop instruction obtaining module (404) further comprises:
a sub-loop instruction set executing module, configured to, in response to obtaining a loop instruction subset, execute the loop instruction subset.

10. The apparatus (400) of claim 9, wherein the sub-loop instruction set executing module comprises:
a second storage module, configured to, in response to obtaining a second start instruction in the loop instruction subset, store a second loop number related to the loop instruction subset into a third register, and store a value of a second program counter corresponding to a sub-loop instruction following the second start instruction in the loop instruction subset, into a fourth register;
a sub-loop instruction obtaining module, configured to obtain the sub-loop instruction following the second start instruction in the loop instruction subset for executing the next sub-loop instruction; and
a second loop determining module, configured to, in response to obtaining a second end instruction for indicating an end of the loop instruction subset, determine a loop execution for the loop instruction subset based on the second loop number in the third register and the value of the second program counter in the fourth register.

11. A computer-readable medium having a computer program stored thereon, wherein the method according to any one of claims 1-5 is implemented when the computer program is executed by a processor.
